Europäisches Patentamt

European Patent Office

Office européen des brevets

(19)

(11) Veröffentlichungsnummer: **0 200 681**
**B1**

(12) **EUROPÄISCHE PATENTSCHRIFT**

(45) Veröffentlichungstag der Patentschrift: **06.06.90**

(21) Anmeldenummer: **86810178.3**

(22) Anmeldetag: **17.04.86**

(51) Int. Cl.⁵: **B 05 B 15/12,** B 05 B 5/08

(54) Elektrostatische Pulverbeschichtungsanlage.

(30) Priorität: **30.04.85 CH 1834/85**

(43) Veröffentlichungstag der Anmeldung:
**05.11.86 Patentblatt 86/45**

(45) Bekanntmachung des Hinweises auf die
Patenterteilung:
**06.06.90 Patentblatt 90/23**

(84) Benannte Vertragsstaaten:
**AT BE DE FR GB IT NL SE**

(56) Entgegenhaltungen:
**EP-A-0 123 967**
**CH-A- 560 558**
**DE-A-3 140 454**
**FR-A- 920 203**
**GB-A-1 310 309**

(73) Patentinhaber: **Ramseier, H.U.**
**Moosstrasse 4**
**CH-3113 Rubigen (CH)**

(72) Erfinder: **Ramseier, Hans-Ulrich**
**Chutzenweg 4**
**CH-3110 Münsingen (CH)**
Erfinder: **Brechbühler, Fritz**
**Türlenweg 15**
**CH-3110 Münsingen (CH)**

(74) Vertreter: **Seehof, Michel et al**
**c/o AMMANN PATENTANWAELTE AG BERN**
**Schwarztorstrasse 31**
**CH-3001 Bern (CH)**

Courier Press, Leamington Spa, England.

EP 0 200 681 B1

**Beschreibung**

Die vorliegende Erfindung bezieht sich auf eine elektrostatische Pulverbeschichtungsanlage, mit einer Kabine mit zwei Stirnseiten, die je mit einem Durchlass für die Werkstücke versehen sind, wobei mindestens die Innenseite der Kabinenwand aus elektrisch nichtleitendem Material besteht.

Eine solche Anlage ist aus der EP-A-0 123 967 bekannt, in welcher eine Kabine beschrieben ist, die aus metallischen Profilplattenelementen gebildet ist, die innen mit PVC-Folien überzogen sind. Es hat sich gezeigt, dass die verhältnismässig dünnen Folien aus einem elektrisch nichtleitenden Kunststoff nicht genügend isolierend sind, sodass bei den hohen Spannungen, die bei solchen Anlagen notwendig sind, immer noch eine recht hohe Aufladung der Wände erfolgt, wodurch die Pulverteilchen haften bleiben. Ausserdem hat es sich gezeigt, dass die in dieser Druckschrift gezeigte Kabinenform nicht optimal bezüglich Absaugen der Pulverrückstande ist.

Aus der CH-A-560 558 ist ferner eine elektrostatische Pulverbeschichtungsanlage bekannt, bei welcher die Kabine mit einem die Kabineninnenwände bestreichenden Luftvorhang versehen ist, um möglichst viel Pulver zurückgewinnen zu können. Ausserdem sind die Kabineninnenwände mit einander schuppenartig überlappenden Abschnitten versehen, die aus Blechbändern bestehen. Bei dieser Kabine ergeben sich besonders daraus Probleme, dass die Innenwände aus einem elektrisch leitenden Material bestehen und sich daher Pulverrückstände an den Wänden ansammeln können.

Aus der FR-A-902 203 ist ferner eine mit elektrostatischen Mitteln arbeitende Anlage zum Beschichten von Gegeständen bekannt, deren Spritzkabine aus Kunststoffwänden besteht, um die Verluste durch das Material zu verringern, das an den Wänden haften bleibt. Diese Anlage arbeitet jedoch im Nassverfahren, so dass die Gestaltung der Kabine aus sicherheitstechnischen Gründen bestimmten Bedingungen gehorchen muss, die bei der — trockenen — Pulverbeschichtung entfallen. Ausserdem ist bei der Nassbeschichtung eine Wiedergewinnung des Beschichtungsmaterials nicht möglich.

Es ist demgegenüber Aufgabe der Erfindung, eine elektrostatische Pulverbeschichtungsanlage anzugeben, bei der möglichst wenig Pulverrückstände an den Innenwänden der Kabine haften bleiben, um einen raschen Farbwechsel und eine hohe Pulverrückgewinnungsrate zu erzielen. Diese Aufgabe wird mit einer in den Ansprüchen beschriebenen Anlage gelöst.

Die Erfindung wird im folgenden anhand einer Zeichnung von Ausführungsbeispielen näher erläutert.

Figur 1 zeigt einen Vertikalschnitt durch eine Kabine,

Figur 2 zeigt einen Horizontalschnitt durch die Kabine gemäss Figur 1,

Figur 3 zeigt die Kabine von Figur 1 in Seitenansicht, und

Figur 4 zeigt schematisch eine erfindungsgemässe Pulverbeschichtungsanlage.

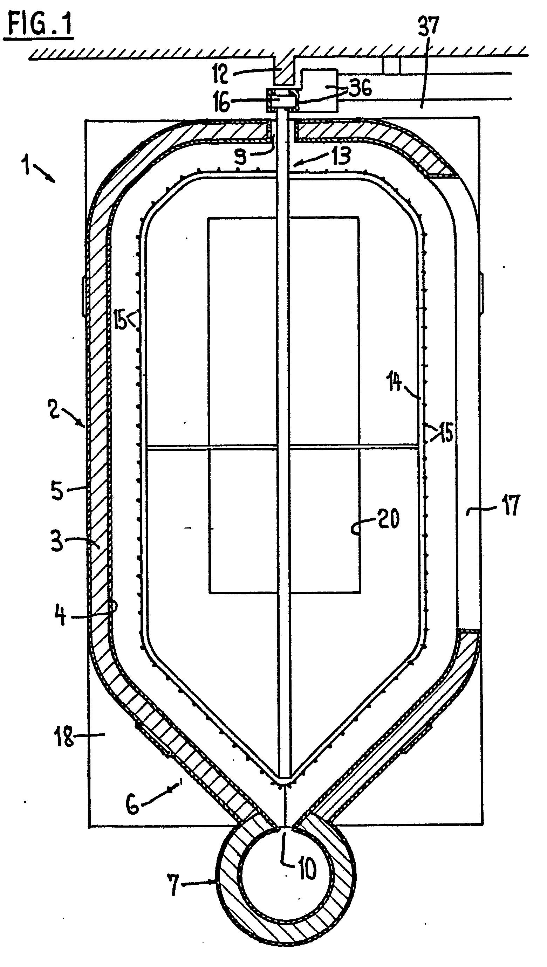

Man erkennt in Figur 1 die Kabine 1, die eine Wand 2, welche aus einem elektrisch nicht leitenden Material, beispielsweise Kunststoff besteht, aufweist. In vorliegendem Beispiel weist die Wand einen Polyurethanschaumstoffkern 3 von 100 mm Dicke auf, der an seiner Innenseite mit einer etwa 8 mm dicken PVC Auflage 4 und an der Aussenseite mit einer anderen Kunststoffauflage 5 beschichtet ist. Selbstverständlich kann die Dicke der verschiedenen Auflagen variieren und andere geeignete Kunststoffe verwendet werden. Der untere Teil 6 der Kabine ist V-förmig ausgebildet, damit die Pulverrückstände leicht in den daran anschliessenden Kanal 7 gelangen, von wo sie abgesaugt werden. Die oberen Kanten der Kabine sind abgerundet, damit möglichst wenig Pulverrückstände haften bleiben. Die Kabine ist in einem Gestell gehalten, das aus Stahlblech gefertigt sein kann, und sie besitzt oben eine Oeffnung 9, durch welche die Wagen mit den Werkstücken oder das weiter unten beschriebene Reinigungsgestell gezogen werden. Die am Boden angeordnete Kanalöffnung 10, die den Uebergang zwischen dem Unterteil der Kabine und dem Sammelkanal 7 bildet, weist keine gleichmässige Breite auf und verbreitet sich von vorne, wo sich das Absaugrohr 11 befindet, nach hinten. Dadurch wird eine möglichst gleichmässige Absauggeschwindigkeit von vorne bis hinten erreicht. Oberhalb der Kabine befindet sich ein Schienensystem 12, an welchem entweder die Werkstücke oder eine Reinigungsanlage herbeigefahren und durch die Kabine geleitet werden können.

Um ein schnelles Umrüsten der Kabine auf eine andere Farbe bewerkstelligen zu können, müssen, wie bereits einleitend erklärt wurde, alle Komponenten ausgetauscht respektive gereinigt werden können, wobei die Kabine die bis anhin am schwierigsten zu reinigende Komponente darstellte. Eine Voraussetzung zur schnellen Reinigung respektive Abführung der Pulverrückstände, ist die Verwendung von nicht leitendem Kunststoff und einer Auskleidung mit geeigneter Oberfläche, an welcher die Pulverteilchen nicht haften. Um die Pulverrückstände möglichst rasch von den Innenwänden der Kabine in den Absaugkanal 7 zu bringen, ist eine Reinigungsvorrichtung 13 vorgesehen, die an einer Transporteinrichtung oder an der Schiene 12 aufgehängt sein kann und durch die Kabine bewegbar ist. Die Reinigungsvorrichtung besteht aus einem Rahmen 14, dessen Form der Innenform der Kabine angepasst ist, wobei der Rahmen aus Rohren besteht, die eine Anzahl von über dem Umfang verteilten Oeffnungen 15 aufweist. Die Rohre des Rahmens sind mit einer Druckluftleitung verbunden, und der Rahmen ist über eine Aufhängung 16 geführt. Während des Durchfahrens des Rahmens durch die Kabine wird gleichzeitig Druckluft durch die Oeffnungen 15 geblasen und die Pulverrückstände im Saugkanal 7 über das Absaugrohr 11 abgesogen. Durch diese erste Reinigung können mindestens 95% der Pulverrückstände aus der Kabine entfernt und der Wiederverwertung zugeführt werden.

In vielen Fällen genügt eine solche Reinigung nicht und es ist notwendig, die Kabine einer gründlicheren Reinigung zu unterziehen. Zu diesem Zwecke können verschiedene Zusatzeinrichtungen vorgesehen werden. Dabei haben sich feuchte Schwämme als besonders vorteilhaft herausgestellt, die entweder auf den Rahmen 14 aufgestckt werden oder auf einem gesonderten Rahmen angebracht sein können. Es ist zur Verbesserung der Reinigung auch möglich, nach dem Reinigungsvorgang mit den feuchten Schwämmen ein letztes Aufnehmen der Reste mittels Tücher, Leder oder anderer geeigneter Lappen vorzunehmen. Da die Schienen respektive deren Vorwärtsbewegung ohnehin vollautomatisch gesteuert werden kann, ist auch der Reinigungsvorgang automatisch steuerbar. Es ist ferner möglich, entweder am gleichen Rahmen oder an einem ähnlichen Rahmen wie bei der vorgehend beschriebenen Drucklufteinrichtung, umlaufende Bürsten anzubringen, die während der Vorwärtsbewegung der ganzen Reinigungsvorrichtung den Wänden der Kabine entlangstreichen und dabei auch rotieren. Dabei ist es auch möglich, gleichzeitig die Wände der Kabine in Vibration zu versetzen, damit die Pulverrückstände in den Kanal hinunterfallen.

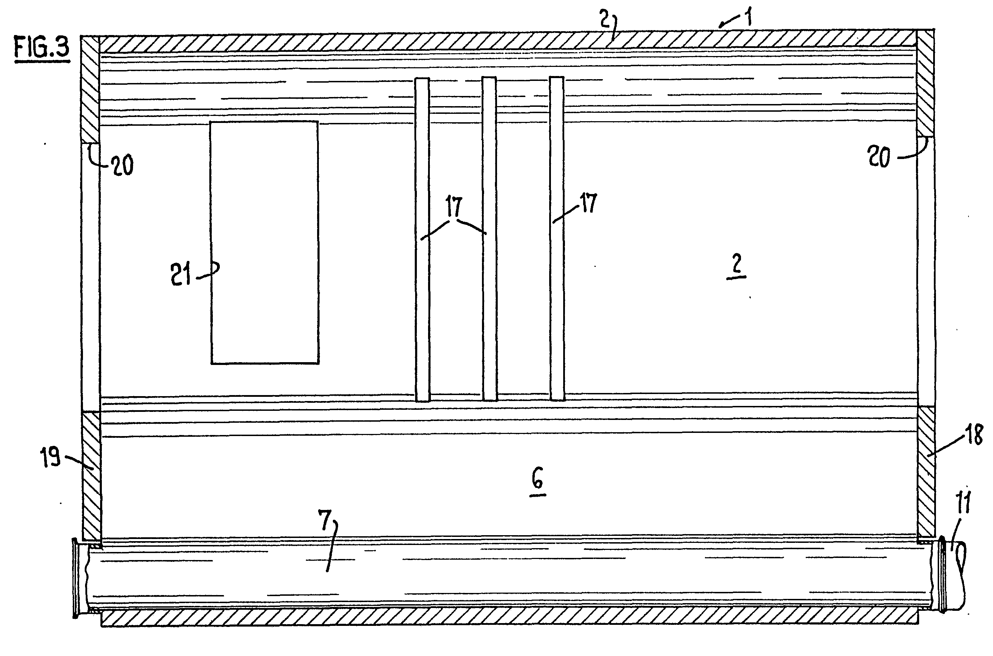

Wie insbesondere aus Figur 3 ersichtlich ist, weist die Kabine an ihren beiden Längsseiten je drei Durchführungen 17 sowie eine grössere Oeffnung 21 resp. 22 auf. Die drei Durchführungen 17 sind für die Pulversprühvorrichtung vorgesehen, die auf einer Arbeitsbühne angeordnet ist, während die Oeffnung 21 resp. 22 für eine manuelle Vor- resp. Nachbearbeitung mittels einer Spritzpistole vorgesehen ist. Diese Durchführungen und Oeffnungen können vom Personal von Hand gereinigt werden, was relativ leicht und rasch durchgeführt werden kann. Die Stirnseiten der Kabine sind in vorliegendem Beispiel als zweiflüglige Tore 18 und 19 ausgebildet, die eine Oeffnung 20 aufweisen. Für die Bearbeitung, d.h. für die Pulverbeschichtung, würden die Oeffnungen 20 genügen, um ein Hindurchfahren der aufgehängten Werkstücke zu ermöglichen, doch für das Einbringen der Reinigungsvorrichtung ist es in diesem Ausführungsbeispiel notwendig, dass die Kabine mindestens an einer Stirnseite voll geöffnet werden kann. Je nach Reinigungsart kann es zweckmässig sein, beide Stirnseiten zu öffnen, um die Kabine möglichst gründlich zu säubern. Bei geöffneten Stirnseiten können die Tore gesondert gereinigt werden. Dabei können während des ersten Reinigungsvorganges mit Druckluft und Absaugen sowohl die Tore als auch die Oeffnungen 20, sowie die Durchführungen 17 dicht verschlossen werden, auch damit möglichst wenig Pulver nach aussen gelangt.

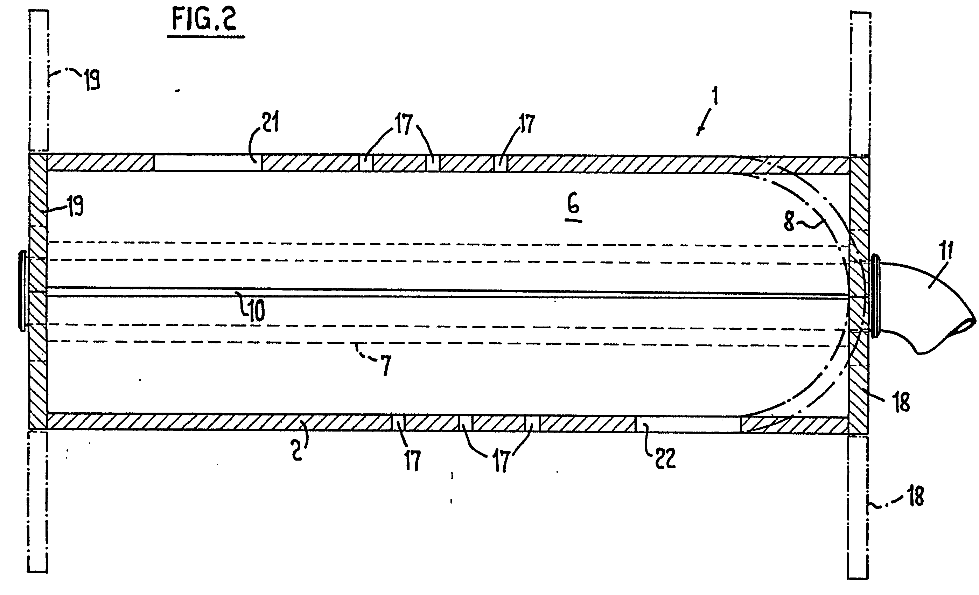

Dies gilt auch für die seitlichen Oeffnungen 21 und 22. Wie zudem aus Figur 2 hervorgeht, sind die Oeffnungen 21, 22 und die Durchführungen 17 nicht genau gegenüber sondern symmetrisch zueinander versetzt angeordnet. Falls nur auf einer Seite Tore angebracht werden, wird die andere Stirnseite zweckmässigerweise abgerundet, wie unter Zeichen 8 strichpunktiert angedeutet ist. In diesem Falle ist es vorteilhaft vorzusehen, dass die Reinigungsvorrichtung drehbar ist, um die abgerundete Stirnseite besser reinigen zu können.

Im Zuge einer weiteren Vereinfachung besitzt die Kabine nur die Durchlässe für die Werkstücke, während beide Stirnseiten, wie unter Zeichen 8 angedeutet, abgerundet sind. Dadurch ist es möglich, eine Kabine ganz ohne bewegliche Teile d.h. Tore herzustellen. Dementsprechend muss die Reinigungsvorrichtung angepasst sein, d.h., der Rahmen muss drehbar und in vertikaler Richtung bewegbar ausgebildet sein, so dass sie durch einen Werkstückdurchlass in die Kabine hineingehoben werden kann, wonach sie anschliessend um 90° geschwenkt werden kann, um durch die Kabine zu fahren.

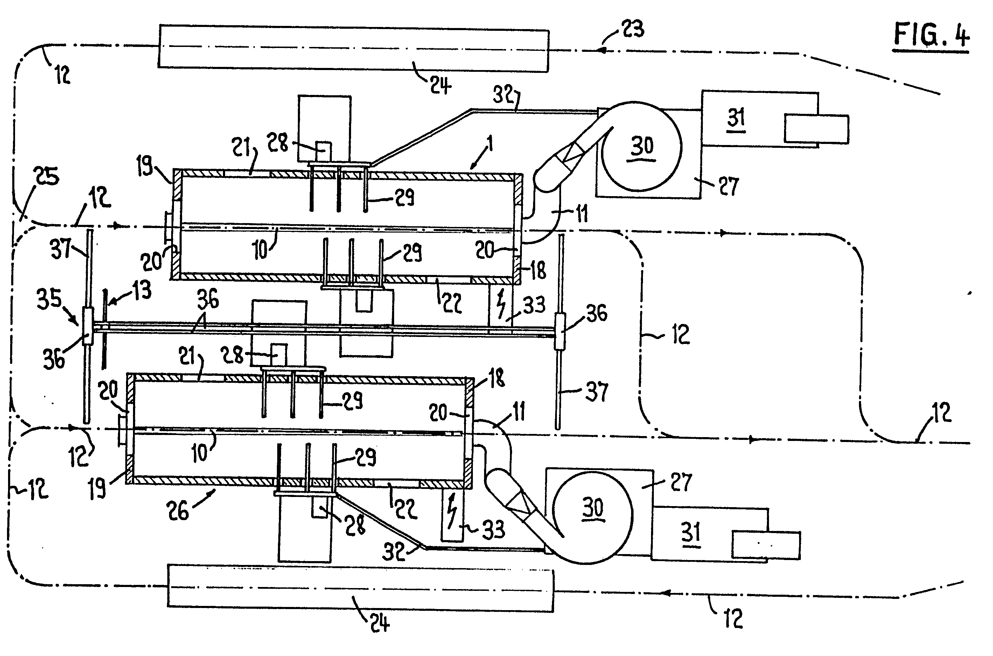

In Figur 4 ist schematisch ein Teil einer elektrostatischen Pulverbeschichtungsanlage gezeichnet, wobei diese Anlage aus zwei getrennten, vollständigen Kreisläufen besteht, wobei es selbstverständlich ist, dass eine Anlage sowohl mit einem vollständigen Kreislauf als auch mit mehr als zwei Kreisläufen arbeiten kann. Verfolgt man den oberen Kreislauf in Richtung des Pfeiles 23, erkennt man die letzte Reinigungsstufe 24 für das Werkstück, wonach das Werkstück entweder in die erste Kabine 1 oder über eine Weiche 25 in die Kabine 26 gelangen kann.

Man erkennt die beiden beidseitig der Kabine angeordneten Hubständer 28, um die Spritzpistolen 29 in horizontaler und vertikaler Richtung zu bewegen, wobei es je nach Anlage weniger oder mehr als drei Pistolen sein können. Das Luft-Pulvergemisch wird aus dem Sammelkanal 11 über einen Zyklon 30 durch ein Absauggebläse 31 mit Nachfilter abgesogen, wobei im Zyklon etwa 95% des Pulvers abgeschieden und wiederverwendet wird. Dieses Pulver gelangt in den Pulverbehälter 27 und von dort über Leitungen 32 zu den Pistolen 29. Bei grossen Anlagen werden je nach Leistung zwei oder mehrere Absauggebläse mit Filter benötigt. Man erkennt ferner die elektrischen Schaltkästen 33 zur Erzeugung der Hochspannung für die Spritzpistolen.

Zwischen den beiden Kabinen ist eine Transport- und Parkiereinrichtung 35 für die Reinigungsvorrichtung 13 angeordnet. Die Reinigungsvorrichtung 13 befindet sich auf einem verschiebbaren Träger 36, der auf Schienen 37 läuft, um die Reinigungsvorrichtung vor die eine oder die andere Kabine zu bringen. Der Träger 36 ist gleichzeitig als Schiene ausgebildet, auf der die Aufhängung der Reinigungsvorrichtung läuft. Es wäre auch denkbar, die Reinigungsvorrichtung auf die Transportschiene 12 für die Werkstücke zu heben und die Reinigung über dieses Transportschienensystem, wie eingangs beschrieben, durchzuführen. In vorliegendem Fall wird die Reinigung unabhängig von diesem Transportschienensystem über die Transport- und Parkiereinrichtung 35 durchgeführt. Insbesondere ist es dadurch möglich, eine Kabine zu reinigen, während in der anderen Kabine gespritzt wird. Die Transport- und Parkiereinrichtung sowie die Reinigungsvorrichtung sind mittels einer Steuerelektronik derart gesteuert, dass die Vorgänge weitgehend automatisiert ablaufen können.

Die elektrostatische Pulverbeschichtungsanlage weist noch weitere, an sich bekannte Komponenten wie Nassreinigungsanlagen, Wasser-, Luft- und Wärmerückgewinnungseinrichtungen sowie Einbrennöfen, und ferner weitere Reinigungselemente wie Filter und dergleichen auf.

Durch die Verwendung von Kunststoffkabinenwänden einerseits und einer gegebenenfalls mehrteiligen Reinigungsvorrichtung andererseits ist es möglich, die Umrüstzeiten auf Bruchteile einer Stunde zu reduzieren, wodurch ein rationeller Betrieb solcher Anlagen für kleine und mittlere Serien wirtschaftlich wird.

**Patentansprüche**

1. Elektrostatische Pulverbeschichtungsanlage, mit einer Kabine (1) mit zwei Stirnseiten, die je mit einem Durchlass (20) für die Werkstücke versehen sind, wobei mindestens die Innenseite der Kabinenwand (2) aus elektrisch nichtleitendem Material besteht, dadurch gekennzeichnet, dass die Kabinenwand (2) vollstandig aus elektrisch nichtleitendem Material besteht, und der untere Teil (6) der Kabine V-förmig gestaltet ist und unten einen an eine Absaugeinrichtung (11, 30) angeschlossenen Sammelkanal (7) aufweist, wobei der Spalt (10) beim Uebergang der Kabinenunterseite (6) in den Sammelkanal (7) eine Breite aufweist, die vom Anschluss des Absaugrohres (11) aus gesehen zunimmt.

2. Anlage nach Anspruch 1, dadurch gekennzeichnet, dass die Kabinenwand (2) aus einem Polyurethankern (3) besteht, der an seiner Innenseite eine PVC-Auflage (4) und an seiner Aussenseite eine Kunststoffauflage (5) aufweist.

3. Anlage nach Ansprüch 1 oder 2, dadurch gekennzeichnet, dass mindestens eine Stirnseite der Kabine (1) ein zweiflügliges Tor (18, 19) mit einem Durchlass (20) für die Werkstücke aufweist.

4. Anlage nach einem der Ansprüche 1 bis 3, dadurch gekennzeichnet, dass eine der Stirnseiten der Kabine innen abgerundet (8) ist und einen Durchlass für die Werkstücke aufweist.

5. Anlage nach Anspruch 1 oder 2, dadurch gekennzeichnet, dass beide Stirnseiten der Kabine abgerundet (8) sind und je einen Durchlass für die Werkstücke aufweisen.

6. Anlage nach einem der Ansprüche 1 bis 5, dadurch gekennzeichnet, dass sie eine der Innenform der Kabine (1, 26) angepasste Reinigungsvorrichtung (13) aufweist, die an Schienen (12, 24) aufgehängt ist und durch die Kabine fahrbar ist.

7. Anlage nach Anspruch 6, dadurch gekennzeichnet, dass die Reinigungsvorrichtung (13) einen der Innenform der Kabine angepassten, hohlen Rahmen (14) enthält, an dessen Umfang Oeffnungen (15) angebracht sind, wobei der Rahmen mit einer Druckluftleitung verbunden ist.

8. Anlage nach Anspruch 6 oder 7, dadurch gekennzeichnet, dass die Reinigungsvorrichtung (13) Schwämme aufweist, die entweder am hohlen Rahmen (14) oder an einem gesonderten Rahmen angebracht sind.

9. Anlage nach Anspruch 6 oder 7, dadurch gekennzeichnet, dass die Reinigungsvorrichtung Bürsten, Lappen, Tücher oder Leder aufweist, die entweder am hohlen Rahmen (14) oder an einem gesonderten Rahmen angebracht sind.

10. Anlage nach einem der Ansprüche 6 bis 9, dadurch gekennzeichnet, dass die Reinigungsanlage (13) drehbar und in vertikaler Richtung bewegbar aufgehängt ist.

11. Anlage nach einem der Ansprüche 1 bis 10, dadurch gekennzeichnet, dass Mittel vorhanden sind, um die Wände der Kabine in Vibration zu versetzen.

12. Anlage nach einem der Ansprüche 1 bis 11, dadurch gekennzeichnet, dass sie eine ausserhalb der Kabine angeordnete Transport- und Parkiereinrichtung (23) für die Reinigungsanlage (13) aufweist, um die Reinigungsvorrichtung vor die Stirnseite der Kabine und anschliessend durch die Kabine zu führen.

13. Anlage nach einem der Ansprüche 1 bis 12 mit zwei Kabinen (1, 26), dadurch gekennzeichnet, dass die ausserhalb der Kabinen angeordnete Transport- und Parkiereinrichtung (23) zwischen beiden Kabinen angeordnet ist und ausgebildet ist, die Reinigungsvorrichtung (13) wahlweise in die eine oder in die andere Kabine zu führen.

14. Verwendung der Reinigungsvorrichtung nach einem der Ansprüche 6 bis 13, in einer Kabine einer Pulverbeschichtungsanlage nach einem der Ansprüche 1 bis 5, dadurch gekennzeichnet, dass in einer Hinfahrt der Reinigungsvorrichtung die Innenwand der Kabine mit Druckluft beaufschlagt wird, die Schwämme anschliessend befeuchtet werden, und bei der Rückfahrt der Reinigungsvorrichtung die Innenwand feucht abgewischt wird, um eine möglichst vollständige Reinigung zu erzielen.

**Revendications**

1. Installation de revêtement électrostatique par poudre, ayant une cabine (1) à deux parois frontales qui sont pourvues chacune d'un passage (20) pour les pièces en travail, au moins l'intérieur de la paroi (2) de la cabine consistant en un matériau électriquement non conducteur, caractérisé en ce que la paroi (2) de la cabine consiste entièrement en un matériau électriquement non conducteur, et que le bas (6) de la cabine est en forme de V et comporte, au fond, un canal collecteur (7) qui est relié à un dispositif d'aspiration (11, 30), la fente (10) située à la transition entre le bas (6) de la cabine et le canal collecteur (7) présentant, vue du côté du raccordement du tuyau d'aspiration (11), une largeur croissante.

2. Installation selon la revendication 1, caractérisée en ce que la paroi (2) de la cabine consiste en un noyau de polyuréthane (3) qui comporte à sa face intérieure une couche de revêtement en PVC (4) et, à sa face extérieure, une couche de revêtement en matière plastique (5).

3. Installation selon la revendication 1 ou 2, caractérisée en ce qu'au moins une paroi frontale de la cabine (1) comporte une porte à deux battants (18, 19) ayant un passage (20) pour les pièces en travail.

4. Installation selon l'une quelconque des revendications 1 à 3, caractérisée en ce qu'une des parois frontales de la cabine est arrondie (8) à l'intérieur et comporte un passage pour les pièces en travail.

5. Installation selon la revendication 1 ou 2, caractérisée en ce que les deux parois frontales de la cabine sont arrondies (8) à l'intérieur et comportent chacune un passage pour les pièces en travail.

6. Installation selon l'une des revendications 1 à 5, caractérisée en ce qu'elle comporte un dispositif de nettoyage (13) adapté à la forme intérieure de la cabine (1, 26) et qui est suspendu à des rails (12, 24) et déplaçable à travers la cabine.

7. Installation selon la revendication 6, caractérisée en ce que le dispositif de nettoyage (13) comporte un cadre creux (14) adapté à la forme intérieure de la cabine, et dont la périphérie est pourvue d'ouvertures, le cadre étant relié à une conduite à air comprimé.

8. Installation selon la revendication 6 ou 7, caractérisée en ce que le dispositif de nettoyage (13) comporte des éponges qui sont attachées soit au cadre creux (14) ou bien à un cadre séparé.

9. Installation selon la revendication 6 ou 7, caractérisée en ce que le dispositif de nettoyage comporte des brosses, des chiffons, des tissus ou des peaux qui sont attachés soit au cadre creux (14) ou bien à un cadre séparé.

10. Installation selon l'une des revendications 6 à 9, caractérisée en ce que l'installation de nettoyage (13) est suspendue rotativement et de manière mobile en direction verticale.

11. Installation selon l'une des revendications 1 à 10, caractérisée en ce que des moyens sont prévus pour mettre les parois de la cabine en vibration.

12. Installation selon l'une des revendications 1 à 11, caractérisée en ce qu'elle comprend un dispositif de transport et de garage (23) pour l'installation de nettoyage (13) situé à l'extérieur de la cabine, afin de guider le dispositif de nettoyage devant la paroi frontale de la cabine et, ensuite, à travers la cabine.

13. Installation selon l'une des revendications 1 à 12 à deux cabines (1, 26), caractérisée en ce que le dispositif de transport et de garage (23) situé à l'extérieur des cabines, est disposé entre les deux cabines et conformé de manière à guider le dispositif de nettoyage (13) dans l'une ou l'autre des cabines sélectivement.

14. Utilisation du dispositif de nettoyage selon l'une des revendications 6 à 13, dans une cabine d'une installation de revêtement par poudre selon l'une des revendications 1 à 5, caractérisée en ce que de l'air comprimé est appliqué à la surface intérieure de la cabine à l'aller du dispositif de nettoyage, que les éponges sont humidifiées par la suite, et que la surface intérieure est épongée à l'état humide au retour du dispositif de nettoyage, pour obtenir un nettoyage aussi complet que possible.

**Claims**

1. An electrostatic powder coating installation, having a cabin (1) with two front sides, each of which being provided with a passage (20) for the workpieces, at least the inner surface of the cabin wall (2) consisting of an electrically non-conductive material, characterized in that the cabin wall (2) is entirely formed of electrically non-conductive material, and that the lower part (6) of the cabin is V-shaped and provided at the bottom with a collecting channel (7) which is connected to a suction device (11, 30), the gap (10) at the transition of the cabin bottom (6) to the collecting channel (7) having a width which increases as seen from the connection of the aspiration tube (11).

2. An installation according to claim 1, characterized in that the cabin wall (2) consists of a polyurethane core (3) which is provided with a PVC coating (4) on the inside and with a plastics coating (5) on the outside.

3. An installation according to claim 1 or 2, characterized in that at least one front side of the cabin (1) is provided with a two-leafed gate (18, 19) having a passage (20) for the workpieces.

4. An installation according to any one of claims 1 to 3, characterized in that one of the front sides of the cabin is rounded off (8) on the inside and provided with a passage for the workpieces.

5. An installation according to claim 1 or 2, characterized in that both front sides of the cabin are rounded off (8) and are provided each with a passage for the workpieces.

6. An installation according to any one of claims 1 to 5, characterized in that it is provided with a cleaning device (13) which is adapted to the internal shape of the cabin (1, 26), the cleaning device being suspended to rails (12, 24) and displaceable through said cabin.

7. An installation according to claim 6, characterized in that the cleaning device (13) comprises a hollow frame (14) adapted to the internal shape of the cabin, holes (15) being provided at the circumference of the frame and the frame being connected to a compressed-air pipe.

8. An installation according to claim 6 or 7, characterized in that the cleaning device (13) comprises sponges which are attached either to the hollow frame (14) or to a separate frame.

9. An installation according to claim 6 or 7, characterized in that the cleaning device comprises brushes, rags, cloths or leathers which are attached either to the hollow frame (14) or to a separate frame.

10. An installation according to any one of claims 6 to 9, characterized in that the cleaning device (13) is suspended rotatably and vertically displaceably.

11. An installation according to any one of claims 1 to 10, characterized in that there are means for setting said cabin walls into vibration.

12. An installation according to any one of claims 1 to 11, characterized in that it comprises on the outside of the cabin a transportation and parking device (23) for the cleaning device (13), in order to guide the cleaning device in front of the cabin and then, through the cabin.

13. An installation according to any one of claims 1 to 12, having two cabins (1, 26), characterized in that the transportation and parking device (23) on the outside of the cabins is placed between the two cabins and adapted to selectively guide the cleaning device (13) into one or the other of the cabins.

14. Use of the cleaning device according to any one of claims 6 to 13 in a cabin of a powder coating installation according to any one of claims 1 to 5, characterized in that compressed air is applied to the internal wall of the cabin during one passage of the cleaning device and the sponges are then moistened, and that the internal wall is wiped during the return passage of the cleaning device in order to achieve as complete a cleaning as possible.

FIG.1

FIG.2

FIG.3

EP 0 200 681 B1

1

2

20

20

17

17

21

2

19

6

18

7

11

FIG. 4

EP 0 200 681 B1